# EUROPÄISCHE PATENTSCHRIFT

(11) **EP 1 180 470 B1**
(45) Veröffentlichungstag und Bekanntmachung des Hinweises auf die Patenterteilung: **20.02.2008**
(21) Anmeldenummer: 01119476.8
(22) Anmeldetag: 14.08.2001
(51) Int. Cl.: B62D 25/04, B62D 29/00

(54) **B-Säule für ein Kraftfahrzeug**
B-pillar for a vehicle
Montant central pour véhicule

(30) Priorität: 19.08.2000 DE 20014361 U
(43) Veröffentlichungstag der Anmeldung: 20.02.2002
(73) Patentinhaber: BENTELER AG, D-33104 Paderborn (DE)
(72) Erfinder: Gehringhoff, Ludger, 33106 Paderborn (DE); Knaup, Hans-Jürgen, 33175 Bad Lippspringe (DE)
(74) Vertreter: Ksoll, Peter

(56) Entgegenhaltungen:
- EP-A- 0 816 520
- DE-A- 19 743 802

## Beschreibung

Die Erfindung betrifft eine B-Säule als Karosseriekomponente für ein Kraftfahrzeug bestehend aus einem Längsprofil aus Stahl.

Sicherheitsrelevante Karosseriekomponenten von Kraftfahrzeugen, insbesondere solche des Sicherheitskäfigs, sind in der Regel werkzeugvergütete Formbauteile mit über das Längsprofil verteilt gleichbleibenden Werkstoffeigenschaften.

Die US-A-5,192,376 offenbart ein Verstärkungsrohr für den Automobilbau aus einer Stahllegierung, zu dessen Herstellung ein Stahl gewalzt und die erzeugte Stahlplatine im heissgewalzten Zustand bei einer Temperatur von 600°C oder höher eingerollt wird. Anschließend wird das so hergestellte Rohr zur Steigerung der Festigkeit einer Abschreckhärtung unterzogen.

Aus crashrelevanten Gründen kann es bei den sogenannten B-Säulen der Fahrgastzelle eines Kraftfahrzeugs von Vorteil sein, wenn diese Bereiche mit unterschiedlichen Materialfestigkeiten und Dehnungseigenschaften besitzt. Eine gängige Ausführungsform ist hierzu eine B-Säule als zweiteilige Pressteilverbindung auszuführen mit einem unteren Pressteil aus weichem Stahl und einem höchstfesten oberen Pressteil, wobei die beiden Pressteile durch bekannte Fügetechniken verbunden werden. Diese Vorgehensweise führt jedoch zu einem erhöhten Fertigungsaufwand und einem höheren Gewicht der B-Säule. Auch wirkt sich die Fügezone mitunter als Schwachstelle bei einem Crashvorgang aus.

Ein unterschiedliches plastisches Steifigkeitsverhalten von werkzeugvergüteten Pressformteilen kann mit einem der in der DE-A-197 43 802 aufgezeigten Verfahren erreicht werden.

Aus der EP-A-0 816 520 geht eine B-Säule als Karosseriekomponente für ein Kraftfahrzeug hervor. Diese ist durch ein Verstärkungsprofil aus Stahl ausgesteift, das auf seiner ganzen Länge in unterschiedlicher Intensität gehärtet wurde. Die Zugfestigkeit des Verstärkungsprofils weist eine bergähnliche Verteilung mit Minima an den Enden und einem Maximum im mittleren Bereich auf.

Hiervon ausgehend liegt der Erfindung die Aufgabe zugrunde, eine B-Säule für ein Kraftfahrzeug hinsichtlich ihres Crashverhaltens, der Herstellungskosten, sowie unter den Gesichtspunkten einer Gewichtsreduzierung zu verbessern.

Die Lösung dieser Aufgabe besteht nach der Erfindung in einer B-Säule nach Schutzanspruch 1 mit einem Längsprofil aus Stahl, welches einen oberen Längenabschnitt aufweist mit einem überwiegend martensitischen Werkstoffgefüge und einer Festigkeit über 1.400 N/mm² und weiterhin einen unteren Längenabschnitt besitzt mit einer höheren Duktivität und einem überwiegend ferritisch-perlitischen Werkstoffgefüge und einer Festigkeit unter 850 N/mm².

Die Ausführung der B-Säule erfolgt aus einem härtbaren Stahl. Insbesondere bietet sich eine Stahllegierung mit an, die in Gewichtsprozent ausgedrückt besteht aus:
Kohlenstoff (C) 0,18 % bis 0,3 %
Silizium (Si) 0,1 % bis 0,7 %
Mangan (Mn) 1,0 bis 2,50 %
Chrom (Cr) 0,1 % bis 0,8 %
Molybdän (Mo) 0,1 % bis 0,5 %
Titan (Ti) 0,02 % bis 0,05 %
Bor (B) 0,002 % bis 0,005 %
Schwefel maximal 0,01 %
Phosphor (P) maximal 0,025 %
Aluminium (AI) 0,01 % bis 0,06 %

Rest Eisen einschließlich erschmelzungsbedingter Verunreinigungen.

Die Herstellung der B-Säule erfolgt im Warmformprozess, wobei ausgehend von einer Formplatine oder eines vorgeformten Längsprofils dieses im Ofen austenitisiert, d.h. erwärmt und anschließend in einem gekühlten Werkzeug umgeformt/gehärtet wird. Im Ofen können großflächige Bereiche der Platine bzw. des vorgeformten Längsprofils gegen dieTemperatureinwirkung isoliert werden. Demzufolge erfahren diese Bereiche keine signifikante Erwärmung, so dass die Temperaturerhöhung insgesamt in diesen Abschnitten deutlich unterhalb der Austenitisierungstemperatur liegt. Folglich kann sich dort im gekühlten Werkzeug kein martensitisches Werkstoffgefüge mit den hohen Festigkeiten einstellen.

Der Bereich des Säulenfusses der B-Säule weist dann im Wesentlichen das ursprüngliche ferritisch-perlitische Gefüge des Ausgangswerkstoffs auf mit sehr guter Duktilität (Festigkeit ca. 500 N/mm², einer Dehnung ca. 20 %). Im restlichen Bereich der Bauteilstruktur ist ein überwiegend martensitisches Werkstoffgefüge gegeben mit einer Zugfestigkeit Rₘ von über 1.400 N/mm².

Möglich ist es auch, zunächst das Längsprofil komplett zu austenitisieren, und beim Transport in das Härtungswerkzeug den unteren Längenabschnitt, also den späteren Säulenfuß, durch gezieltes nicht zu schroffes abkühlen, beispielsweise durch Anblasen, auf eine Temperatur deutlich unter Austenitisierungstemperatur zu bringen. Im Härtungswerkzeug stellt sich dann kein reines martensitisches Gefüge ein, sondern ein Mischgefüge mit deutlichen Ferrit/Bainit-Anteilen, welches duktile Eigenschaften besitzt.

Die erfindungsgemäße B-Säule weist ein optimiertes Crashverhalten durch die gezielt eingestellte Paarung von Festigkeit und Duktilität auf. Zudem führt die Erfindung zu einer Teilereduzierung ebenso wie zu einer Gewichtsreduzierung, weil zusätzliche Fügestellen zwischen ansonsten separat gefertigten Bauteilen wegfallen. Insgesamt ergibt sich hierdurch auch eine Kostenreduzierung.

Nach den Merkmalen des Schutzanspruchs 2 ist die Bruchdehnung A im unteren Längenabschnitt unter 25 %, vorzugsweise zwischen 15 und 22 %. Infolgedessen weist der untere Längenabschnitt ein deutliches plastisches Steifigkeitsverhalten auf. Die B-Säule ist gezielt auf die im Crashfall erforderlichen Eigenschaften abgestimmt. Im oberen Längenabschnitt weist sie eine hohe Festigkeit auf, wohingegen sie im Bereich des unteren Längenabschnitts (im Säulenfuß) eine hohe Duktilität besitzt.

In der vorteilhaften Ausgestaltung von Schutzanspruch 3 ist der untere Längenabschnitt breiter als der obere Längenabschnitt ausgeführt. Durch diese Maßnahme ebenso wie dadurch, dass das Längsprofil vorzugsweise im oberen Längenabschnitt einen räumlich gekrümmten Abschnitt aufweist (Schutzanspruch 4), werden die vorteilhaften Verformungseigenschaften des Längsprofils im Crashfall verbessert.

Die Erfindung ist nachfolgend anhand von in den Zeichnungen dargestellten Ausführungsbeispielen näher beschrieben. Es zeigen:
- Fig. 1 und 2: zwei Ausführungsformen einer erfindungsgemäßen B-Säule in perspektivischen Ansichten,
- Fig. 3: in schematischer Darstellungsweise eine Formplatine einer B-Säule und
- Fig. 4: in technisch vereinfachter Darstellungsweise eine Seitenansicht auf eine Platine zur Fertigung einer B-Säule mit Kaspelung eines Endes zur Wärmeisolierung.

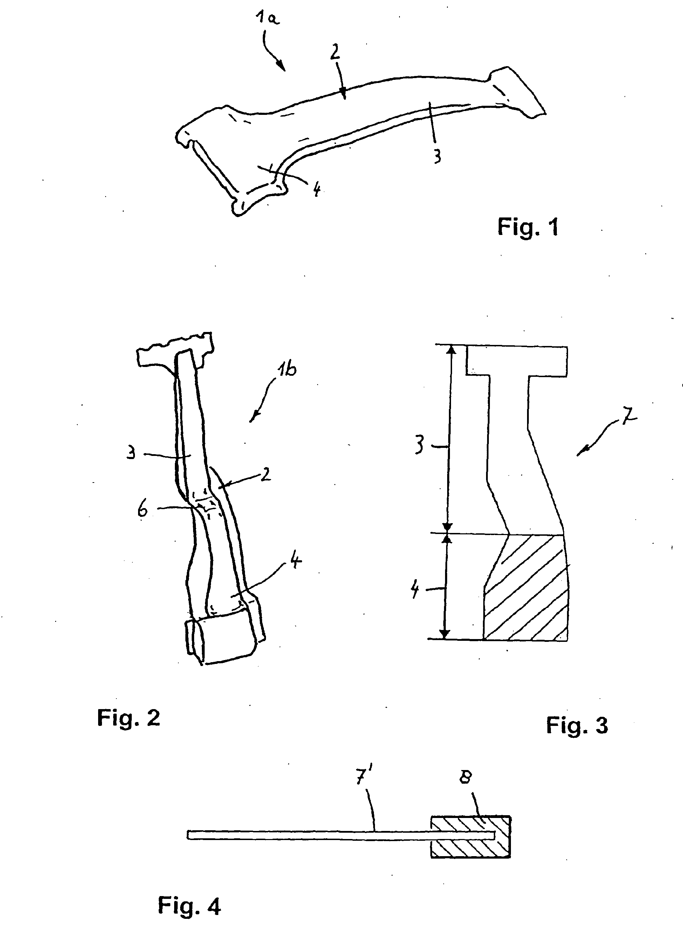

In den Figuren 1 und 2 ist mit 1a und 1b jeweils eine B-Säule für ein Kraftfahrzeug bezeichnet. Die B-Säulen 1a, 1b bestehen jeweils aus einem Längsprofil 2 aus Stahl.

Ein solches Längsprofil 2 weist einen oberen Längenabschnitt 3 auf, welcher ein überwiegend martensitisches Werkstoffgefüge mit einer Zugfestigkeit Rₘ von über 1.400 N/mm² besitzt. Das Längsprofil 2 geht dann in einen unteren Längenabschnitt 4 über, welcher den Säulenfuß 5 bildet. Dieser weist eine im Vergleich zum oberen Längenabschnitt 3 wesentlich höhere Duktilität auf und besitzt ein überwiegend ferritisch/perlitisches Werkstoffgefüge und eine Festigkeit unter 850 N/mm². Die Bruchdehnung A liegt im unteren Längenabschnitt 4 unter 25 %, insbesondere bei ca. 20 %.

Man erkennt ferner, dass der untere Längenabschnitt 4 breiter als der obere Längenabschnitt 3 ist. Anhand der Figur 2 wird deutlich, dass im oberen Längenabschnitt 3 des Längsprofils 2 ein räumlich gekrümmter Abschnitt 6 vorhanden ist.

Die B-Säulen 1a, 1b werden aus einer Formplatine 7 wie in der Figur 3 ersichtlich hergestellt. Diese weist eine auf die Fertigung der B-Säule 1a, 1b abgestimmte Außenkontur auf mit einem ersten oberen gehärteten Längenabschnitt 3 und einem zweiten unteren Längenabschnitt 4, welcher duktile Werkstoffeigenschaften mit Festigkeiten von ca. 500 N/mm² und einer Dehnung von ca. 20 % besitzt. In einem Pressenwerkzeug wird die Formplatine 7 zu einer B-Säule 1a bzw. 1b ungeformt.

Die Fertigung der B-Säulen 1a, 1b erfolgt aus einer härtbaren Stahllegierung. Hierzu wird eine Formplatine 7 oder ein vorgeformtes Profil in einem Ofen austenitisiert und anschließend in einem gekühlten Werkzeug umgeformt und gehärtet. Im Ofen wird der Bereich des Säulenfußes 5, der am späteren Bauteil duktile Werkstoffeigenschaften aufweisen soll, durch eine Isolierung 8 gegen eine gefügeverändernde Erwärmung geschützt. Eine Platine 7' mit einer Isolierung 8 ist in der Figur 4 dargestellt. Die Temperaturerhöhung in dem durch die Isolierung 8 geschützten Bereich liegt dann deutlich unter der Austenitisierungstemperatur, so dass sich kein martensitisches Werkstoffgefüge mit den hohen Festigkeiten im gekühlten Werkzeug einstellen kann. Diese Bereiche bilden dann an der B-Säule 1a, 1b den zweiten Längenabschnitt mit dem Säulenfuß 5, welche im Wesentlichen das ursprünglich ferritisch/perlitische Werkstoffgefüge des Ausgangswerkstoffs aufweisen mit einer sehr guten Duktilität. Das übrige Bauteil besitzt wegen des überwiegend martensitischen Werkstoffgefüges eine Festigkeit von ca. 1.500 N/mm².

### Bezugszeichenaufstellung

- 1 a -: B-Säule
- 1b -: B-Säule
- 2 -: Längsprofil
- 3-: oberer Längenabschnitt
- 4-: unterer Längenabschnitt
- 5 -: Säulenfuß
- 6 -: Abschnitt
- 7 -: Formplatine
- 7' -: Platine
- 8 -: Isolierung

## Patentansprüche

1. B-Säule als Karosseriekomponente für ein Kraftfahrzeug, bestehend aus einem Längsprofil (2) aus Stahl, wobei das Längsprofil (2) einen oberen Längenabschnitt (3) mit einem überwiegend martensitischen Werkstoffgefüge und einer Festigkeit über 1.400 N/mm² und einen unteren Längenabschnitt (4) höherer Duktilität mit einem überwiegend ferritisch-perlitischen Werkstoffgefüge und einer Festigkeit unter 850 N/mm² aufweist.

2. B-Säule nach Schutzanspruch 1, bei welcher die Bruchdehnung A im unteren Längenabschnitt (4) unter 25 %, vorzugsweise zwischen 15 und 22 % liegt.

3. B-Säule nach Schutzanspruch 1 oder 2, bei welcher der untere Längenabschnitt (4) breiter als der obere Längenabschnitt (3) ist.

4. B-Säule nach einem der Schutzansprüche 1 bis 3, bei welcher das Längsprofil (2), vorzugsweise im oberen Längenabschnitt (3), einen räumlich gekrümmten Abschnitt (6) aufweist.

## Claims

1. B-pillar as a motor vehicle body component, comprising a steel longitudinal profile (2), wherein the longitudinal profile (2) has an upper longitudinal portion (3) with a predominantly martensitic material structure and a strength of greater than 1400 N/mm², and has a lower, more ductile longitudinal portion (4) with a predominantly ferritic-pearlitic material structure and a strength of less than 850 N/mm².

2. B-pillar according to Claim 1, in which the elongation at break A in the lower longitudinal portion (4) is less than 25%, preferably between 15 and 22%.

3. B-pillar according to Claim 1 or 2, in which the lower longitudinal portion (4) is wider than the upper longitudinal portion (3).

4. B-pillar according to one of Claims 1 to 3, in which the longitudinal profile (2) has, preferably in the upper longitudinal portion (3), a spatially curved portion (6).

## Revendications

1. Montant central pour un véhicule, formant élément de carosserie, consistant en un profil longitudinal (2) en acier, le profil longitudinal (2) présentant une section longitudinale supérieure (3) avec une structure de matiériau qui est de façon prédominante martensitique et une résistance au-dessus de 1400 N/mm² et une section longitudinale inférieure (4) de ductilité supérieure avec une structure de matiériau qui est de façon prédominante ferritique-perlitique et une résistance inférieure à 850 N/mm².

2. Montant central selon la revendication 1, dans lequel la dilatation de rupture A dans la section longitudinale inférieure (4) se situe en-dessous de 25 %, de préférence entre 15 et 22 %.

3. Montant central selon la revendication 1 ou la revendication 2, dans lequel la section longitudinale inférieure (4) est plus large que la section longitudinale supérieure (3).

4. Montant central selon l'une des revendications 1 à 3, dans lequel le profil longitudinal (2) présente, de préférence dans la section longitudinale supérieure (3), une section (6) courbée dans l'espace.
